# EUROPEAN PATENT APPLICATION

(11) **EP 1 161 012 A1**
(43) Date of publication of application: **05.12.2001**
(21) Application number: 01900642.8
(22) Date of filing: 10.01.2001
(51) Int. Cl.: H04J 13/04, H04B 7/26

(54) **INTERFERENCE SIGNAL ELIMINATING APPARATUS AND METHOD OF ELIMINATING INTERFERENCE SIGNAL**

(30) Priority: 18.01.2000 JP 2000009268
(71) Applicant: MATSUSHITA ELECTRIC INDUSTRIAL CO., LTD., Kadoma-shi, Osaka 571-8501 (JP)
(72) Inventor: MIYOSHI, Kenichi, Yokohama-shi, Kanagawa 232-0066 (JP); MIYA, Kazuyuki, Kawasaki-shi, Kanagawa 215-0021 (JP)
(74) Representative: Grünecker, Kinkeldey, Stockmair & Schwanhäusser Anwaltssozietät
(86) International application number: JP0100064
(87) International publication number: WO0154329

(57) **Abstract**

The correlation value calculation section 201 for a data channel decides the symbol rate of data channel signals based on a plurality of correlation values after having obtained a correlation value per symbol for each of the symbol rates that become candidates of specified symbol rates, with respect to the data channel signals of specified symbol rates, and the re-spreading section 208 carries out spreading processing with a spreading code corresponding to the decided symbol rate, thereby generating replica signals.

## Description

### Technical Field

The present invention relates to an interference signal canceling apparatus and an interference signal canceling method, which are used in a mobile communication system of CDMA(Code Division Multiple Access)system.

### Background art

Since, in a mobile communication system of the CDMA system, signals of a plurality of users are transmitted in the same band, signals that are received by a receiving side apparatus are subjected to interference caused by various signals, and the characteristics of the received signals may deteriorate.

Conventionally, as an apparatus for canceling interference signals, there are apparatuses described in 1) "Sequential Channel Estimation Type Serial Canceller Using a pilot Symbol in DS-CDMA (Technical Bulletin, RCS95-50, July, 1995, Radio Communication System Research Society of the Institute of Electronics, Information and Communication Engineers)" authored by Sawahashi, Miki, Andoh, and Higuchi, 2) "Sequential Transmission Line Estimation Type CDMA Multistage Interference Canceller Utilizing a Symbol Replica Process (Technical Bulletin, RCS96-171, February, 1997, Radio Communication System Research Society of the Institute of Electronics, Information and Communication Engineers)" authored by Yoshida and Ushirokawa, and 3) "Study of CDMA Interference Canceller in an Upstream Line (Technical Bulletin, RCS96-121, January, 1997, Radio Communication System Research Society of the Institute of Electronics, Information and Communication Engineers)" written by Uesugi, Katoh, and Honma. Hereinafter, the above-described three apparatuses are, respectively, called 1) Serial type Interference Signal Canceling Apparatus, 2) Parallel type Interference Signal Canceling Apparatus, and 3) Symbol Ranking Type Interference Signal Canceling Apparatus.

In any one of the above-described three apparatuses, replica signals are generated by received signals, and the replica signals are subtracted from the received signals, whereby interference signals are eliminated from the received signals. In the above-described three apparatuses, the received signals are provisionally decided after having been despread, and replica signals are generated by re-spreading the results of the provisional decision. Since re-spreading processing is required to generate the replica signals, it is not possible to generate the replica signals as long as the symbol rate or spreading factor of the received signals is not made clear.

Herein, in the case where a communication protocol in which the symbol rate (that is, transmission rate) of signals varies frame by frame is used in a communication system, the spreading factor also changes in response to changes in the symbol rate. Therefore, in any of the above-described conventional interference signal canceling apparatuses, no replica signal of a frame can be generated unless signals corresponding to one frame are demodulated.

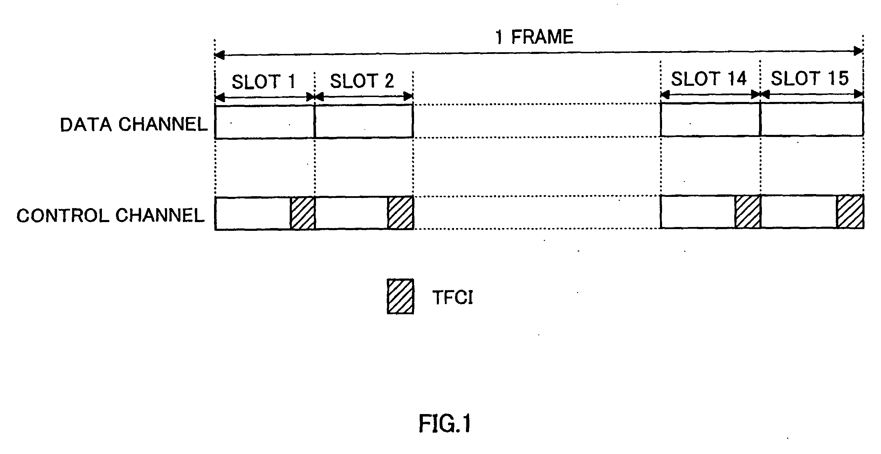

Specifically, in the case where the symbol rate of data channel signals varies frame by frame, as shown in FIG. 1, the above-described conventional interference signal canceling apparatuses cannot decide the symbol rate of the data channel signals until 15 slots ( equivalent to one frame) of control channel signals TFCI (Transport Format Combination Indicator), for which the symbol rate is fixed, are received. In other words, the above-described conventional interference signal canceling apparatuses cannot decide the spreading factor of the data channel signals until 15 slots of the control channel signals TFCI are received. That is, the above-described conventional interference signal canceling apparatuses cannot generate any replica signal until 15 slots of the control channel signal TFCI are received. Therefore, in the above-described conventional interference signal canceling apparatuses, such a problem arises, in which a delay until a replica signal is generated becomes one frame at a minimum, and the delay time is made very long.

### Disclosure of Invention

It is therefore an object of the present invention to provide an interference signal canceling apparatus and an interference signal canceling method, which can reduce the delay until a replica signal is generated, and improve the receiving performance of a radio receiving apparatus.

The inventors of the present invention found out that with respect to a received signal with a particular symbol rate, the symbol rate of the received signal is decided by obtaining a despread result (correlation value) per one symbol for each candidate symbol rate, and comparing the despread results', and carried out the present invention.

Therefore, in order to achieve the above-described object, the present invention attempted to reduce a delay until a replica signal is generated, by generating the replica signal by performing re-spreading processing with a spreading code corresponding to a symbol rate that is decided prior to receiving signals equivalent to one frame.

### Brief Description of Drawings

FIG. 1 is an exemplary view showing a slot framework of a data channel and a control channel;
FIG. 2 is a block diagram of the major parts showing a brief configuration of an interference signal canceling apparatus according to a first embodiment of the present invention;
FIG. 3 is a block diagram of the major parts, showing a brief configuration of ICU of the first stage and second stage of an interference signal canceling apparatus according to the first embodiment of the present invention;
FIG. 4 is a block diagram of the major parts, showing a brief configuration of ICUs of the third stage of an interference signal canceling apparatus according to the first embodiment of the present invention;
FIG. 5A is an exemplary view showing the relationship between a received signal, which is inputted into an interference signal canceling apparatus according to the first embodiment of the present invention, and a spreading code by which the received signal is spread;
FIG. 5B is an exemplary view showing the relationship between a received signal, which is inputted into an interference signal canceling apparatus according to the first embodiment of the present invention, and a spreading code by which the received signal is spread;
FIG. 5C is an exemplary view showing the relationship between a received signal, which is inputted into an interference signal canceling apparatus according to the first embodiment of the present invention, and a spreading code by which the received signal is spread;
FIG. 5D is an exemplary view showing the relationship between a received signal, which is inputted into an interference signal canceling apparatus according to the first embodiment of the present invention, and a spreading code by which the received signal is spread;
FIG. 6 is a block diagram of the major parts, showing a brief configuration of a correlation value calculation section for the data channel of an interference signal canceling apparatus according to the first embodiment of the present invention;
FIG. 7 is a block diagram of the major parts, showing a brief configuration of a correlation value calculation section for the data channel of an interference signal canceling apparatus according to a second embodiment of the present invention;.
FIG. 8 is a block diagram of the major parts, showing a brief configuration of an ICU of the first stage and second stage of an interference signal canceling apparatus according to a third embodiment of the present invention; and
FIG. 9 is a block diagram of the major parts, showing a brief configuration of a correlation value calculation section for the data channel of an interference signal canceling apparatus according to the third embodiment of the present invention.

### Best Mode for Carrying Out the present invention

Hereinafter, a detailed description is given of the embodiments of the present invention with reference to the accompanying drawings.

### (Embodiment 1)

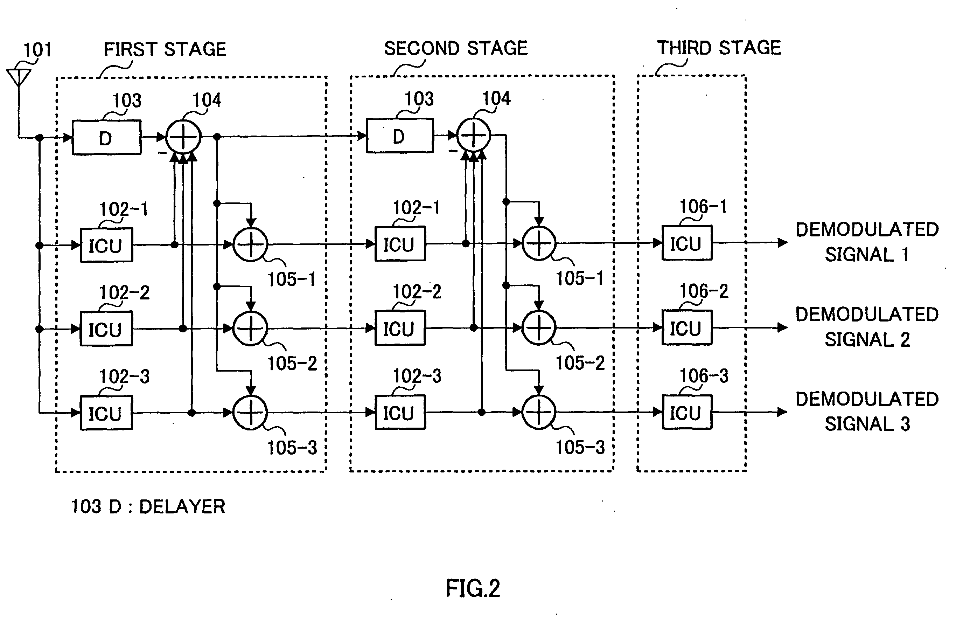

FIG. 2 is a block diagram of the major parts showing a brief configuration of an interference signal canceling apparatus according to a first embodiment of the present invention. Also, in the following description, a description is given of the case, as an example, where it is assumed that the number of stages of the interference signal canceling apparatus is three, the number of communication partners is three, and the number of multipaths is three. In addition, these numbers are just one example, and the present invention is not limited to these numbers.

Further, as shown in FIG. 2, since the configuration of the first stage is made the same as that of the second stage, parts showing the same sections are given the same reference numbers, and an overlapping description is omitted in the second stage.

In FIG. 2, a received signal is inputted into ICUs (Interference Canceling Units) 102-1 through 102-3, and a delayer 103 through an antenna 101. The delayer 103 delays the received signal by a processing time required by the ICUs 102-1 through 102-3 and outputs it into an adder 104.

The ICUs 102-1 through 102-3 are provided so as to correspond to communication partners 1 through 3, and generate replica signals corresponding to the respective communication partners. The configuration of the ICUs 102-1 through 102-3 will be described in detail later. The replica signals that are generated by the ICUs 102-1 through 102-3 are inputted into the adder 104, and at the same time, are inputted into adders 105-1 through 105-3.

In an adder 104, the replica signals of the communication partners 1 through 3 are subtracted from the received signals, whereby the replica signals of all communication partners are eliminated from the received signals. Signals (residual signals) obtained by eliminating the replica signals of all communication partners from the received signals are inputted into adders 105-1 through 105-3, and simultaneously inputted into the delayer 103 of the second stage.

In the adder 105-1, the replica signal of the communication partner 1 is added to the residual signals, whereby the replica signals of the communication partner 2 and those of the communication partner 3 are eliminated from the received signals. That is, signals of the communication partner 2 and those of the communication partner 3, which will cause interference with the communication partner 1, are eliminated from the received signals, wherein desired signals about the communication partner 1 can be obtained. In the adders 105-2 and 105-3, a process similar to that described above is carried out, and signals that will cause interference with other communication partners are eliminated from the received signals, wherein desired signals about the communication partners 2 and 3 can be, respectively, obtained. The desired signals thus obtained are, respectively, inputted into the ICUs 102-1 through 102-3 in the second stage.

Herein, in the second stage, an interference signal canceling apparatus according to the present invention improves the accuracy of the replica signals and the accuracy of canceling interference signals by repeating the process similar to that described above, which was carried out in the first stage. That, the greater the number of stages is increased, the greater the interference signals provided from other communication partners are eliminated about respective communication partners.

Signals added by adders 105-1 through 105-3 in the second stage are inputted into ICUs 106-1 through 106-3 of the third stage and demodulated therein; whereby demodulated signals 1 through 3 of the communication partners 1 through 3 are obtained. The configuration of ICUs 106-1 through 106-3 will be described later.

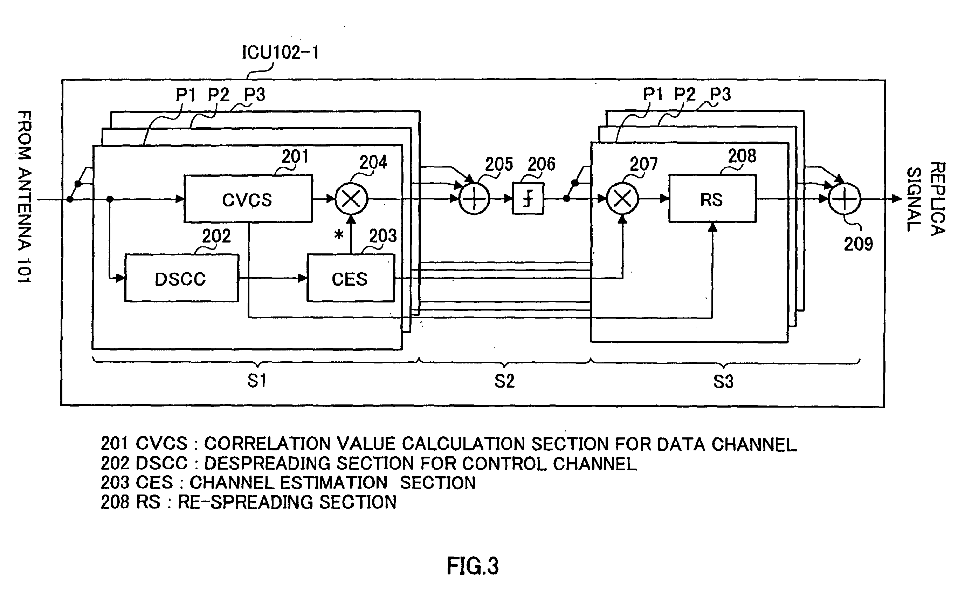

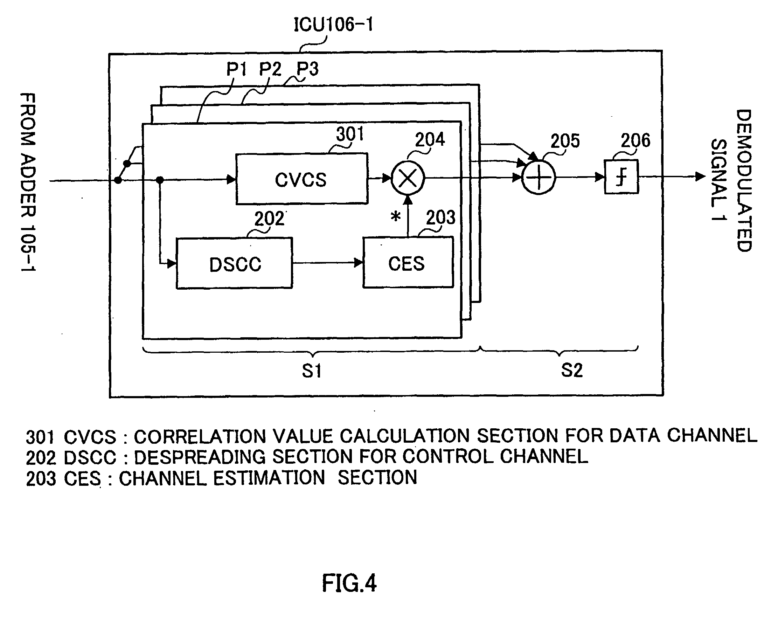

Next, a description is given of the ICUs 102-1 through 102-3 and ICUs 106-1 through 106-3. FIG. 3 is a block diagram of the major parts, showing a brief configuration of ICU of the first stage and second stage of an interference signal canceling apparatus according to the first embodiment of the present invention. Also, FIG. 4 is a block diagram of the major parts, showing a brief configuration of ICUs of the third stage of an interference signal canceling apparatus according to the first embodiment of the present invention. Also, all of the ICUs 102-1 through 102-3 in the first and second stages have the same configuration and perform the same operations. Also, the ICUs 106-1 through 106-3 in the third stage have the same configuration and the same operations. Therefore, in the following description, a description is given of only the ICU 102-1 in the first stage and ICU 106-1 in the third stage, each corresponding to a communication partner 1. And a description of the respective ICUs corresponding to the communication partners 2 and 3 is omitted. Also, the ICU 102-1 shown in FIG. 3 and the ICU 106-1 shown in FIG. 4 are constructed where it is assumed that the number of multipaths to a radio receiving apparatus is three, and in FIG. 3 and FIG. 4, sections for the respective paths are indicated as P1 through P3. Since the respective sections for the respective paths have the same configuration and perform the same operations, a description is given of only P1 for the first path, and the description of P2 for the second path and P3 for the third path is omitted.

In FIG. 3, the ICU 102-1 briefly includes a preceding stage S1 in which a despreading process is carried out with respect to received signals, an intermediate stage S2 in which RAKE-combination and provisional decision are carried out, and the last stage S3 in which replica signals are generated by a re-spreading process.

The received signals are inputted into a correlation value calculation section 201 for a data channel and a despreading section 202 for a control channel through an antenna 101. The correlation value calculation section 201 for a data channel carries out despreading processing with respect to the data channel signals of the received signals and decides the symbol rate of the data channel signals. The correlation value calculation section 201 for a data channel outputs the results of the despreading to a multiplier 204, and at the same time, informs a re-spreading section 208 of the decided symbol rate. The configuration of the correlation value calculation section 201 for the data channel will be described later.

On the other hand, the despreading section 202 for a control channel carries out despreading processing with respect to the control channel signals of the received signals and outputs the results of the despreading to a channel estimation section 203. The channel estimation section 203 carries out a channel-estimation on the basis of the results of the despreading, outputs a complex conjugate of the channel-estimated values to the multiplier 204, and outputs the channel-estimated values to another multiplier 207. In the multiplier 204, the results of the despreading of the data channel signals are multiplied by the complex conjugate of the channel-estimated values, whereby a phase rotation of the data channel signal is compensated.

The results of the despreading of the respective paths P1 through P3, which are multiplied by the complex conjugate of the channel-estimated values is RAKE-combined by the adder 205 in the intermediate stage S2. The RAKE-combined results are provisionally decided by a decider 206. The signals which have been subjected to the provisional decision are multiplied by the channel-estimated values by the multiplier 207 in the respective paths P1 through P3 in the last stage S3 and are inputted into the re-spreading section 208.

The re-spreading section 208 re-spreads the signals, which are outputted by the multiplier 207, by a spreading code corresponding to the symbol rate that has been decided by the correlation value calculation section 201 for the data channel. The signals that have been re-spread in the respective paths P1 through P3 are added by an adder 209, whereby replica signals are obtained with respect to the communication partner 1.

Next, a description is given of the ICU 106-1 of the third stage. As shown in FIG. 4, the ICU 106-1 of the third stage has almost the same configuration as that of the preceding stage S1 and intermediate stage S2 of the ICU 102-1 shown in FIG. 3. Therefore, parts which are identical to those in the ICU 102-1 shown in FIG. 3 are given the same reference numbers, and an overlapping description of the relevant parts of the ICU 106-1 in the third stage is omitted. A point in which the ICU 106-1 differs from the ICU 102-1 resides in that the correlation value calculation section 301 for a data channel does not inform the subsequent stages of the symbol rate. This is because in the third stage, demodulated signal 1 is outputted instead of the replica signal, and therefore the re-spreading process is not required, whereby a symbol rate necessary for the re-spreading process is not required also.

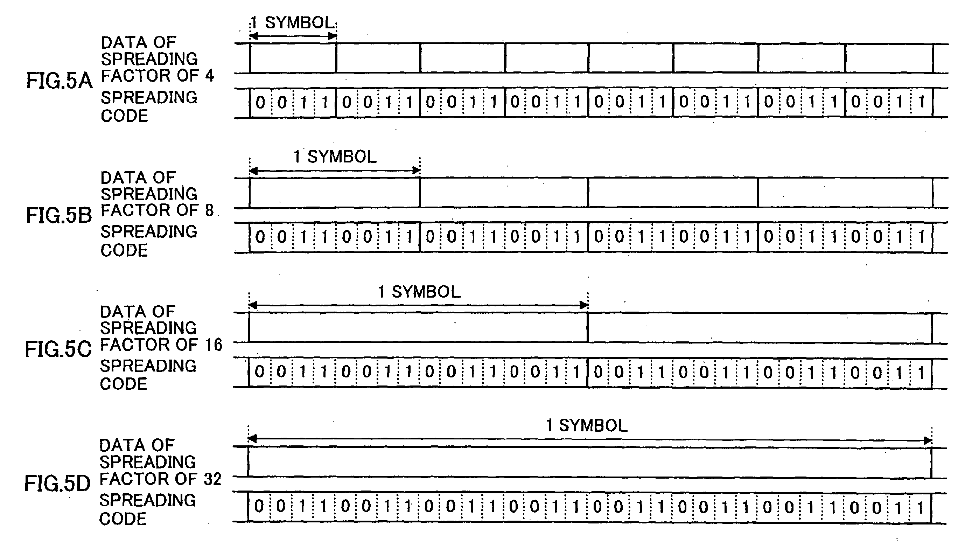

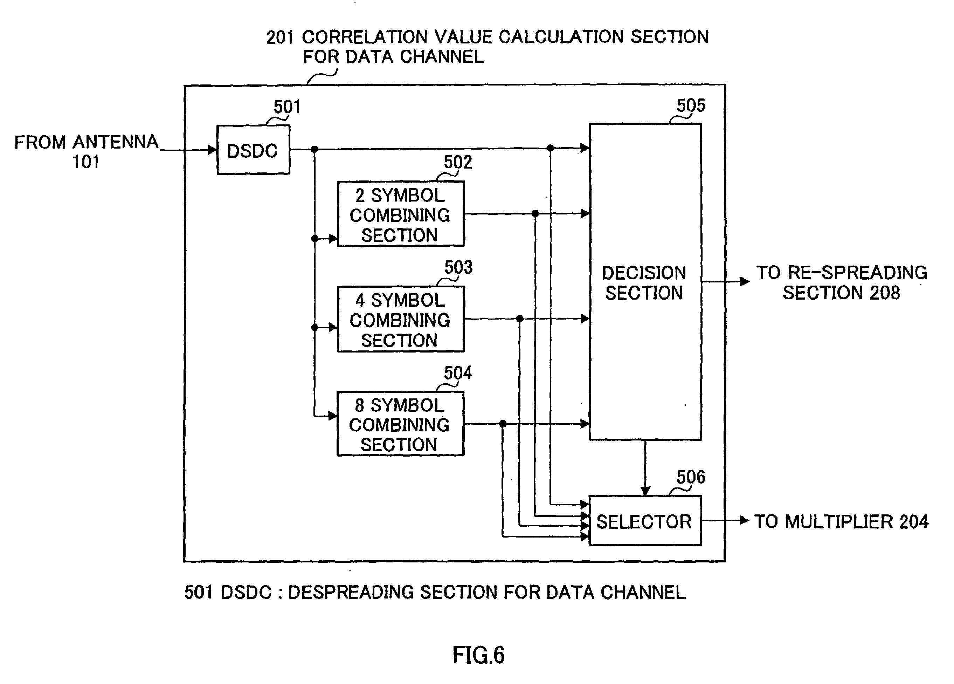

Next, a description is given of a correlation value calculation section 201-1 for a data channel in the first and second stages. FIG. 5A through FIG. 5D are exemplary views showing the relationship between a received signal, which is inputted into an interference signal canceling apparatus according to the first embodiment of the present invention, and a spreading code by which the received signal is spread, and FIG. 6 is a block diagram of the major parts, showing a brief configuration of a correlation value calculation section for the data channel of an interference signal canceling apparatus according to the first embodiment of the present invention.

As shown in FIG. 5A through FIG. 5D, it is now assumed that there is a possibility that received signals of four symbol rates, that is, those spread at four spreading factors which are the spreading factor of 4, the spreading factor of 8, the spreading factor of 16 and the spreading factor of 32, are inputted into an interference signal canceling apparatus. That is, the specified four symbol rates are made into candidates of the symbol rates of the received signals. It is also assumed that spreading codes with respective spreading factors are obtained by repeating the spreading code with the lowest spreading factor (i.e., the highest symbol rate) among the four codes, as shown in FIG.5A through FIG.5D. That is, where it is assumed that the spreading code of the spreading factor of 4 is "0011", the spreading code of the spreading factor of 8 is made into "00110011" in which the spreading code of the spreading factor of 4 is repeated two times. Hereinafter, similarly, the spreading code of the spreading factor of 16 is made into the spreading code in which the spreading code of the spreading factor of 4 is repeated four times, and the spreading code of the spreading factor of 32 is made into a spreading code in which the spreading code of the spreading factor of 4 is repeated eight times.

In FIG. 6, as shown in FIG.5A, first, the despreading section 501 for a data channel carries out despreading with respect to the received signals equivalent to a length of one symbol at the spreading factor of 4 with a spreading code of the lowest spreading factor among spreading factors having a possibility of being used, that is, the spreading code "0011" of the spreading factor of 4.

As described above, since the spreading code of the spreading factor of 8 becomes a spreading code in which a spreading code of the spreading factor of 4 is repeated two times, the received signal equivalent to one symbol of the spreading factor of 8 is equal to the signal in which received signals of the spreading factor of 4 are combined equivalent to two symbols. Therefore, combining two symbols resulting from the despreading with the spreading code with the spreading factor of 4 obtains a despread result of one symbol of a signal spread with the spreading code with the spreading factor of 8. Similarly, combining four symbols resulting from the despreading with the spreading code with the spreading factor of 4 obtains a despread result of one symbol of a signal spread with the spreading code with the spreading factor of 16, and combining eight symbols resulting from the despreading with the spreading code with the spreading factor of 4 obtains a despread result of one symbol of a signal spread with the spreading code with the spreading factor of 32. That is, if there are received signals equivalent to a length of one symbol of the spreading factor of 4, it is possible to obtain the results of despreading equivalent to one symbol of the received signals that are spread by four spreading factors, respectively.

Therefore, a despreading section 501 for a data channel outputs the results, which are obtained by despreading the received signals by a spreading code "0011" of the spreading factor of 4, to 2-symbol combining section 502, 4-symbol combining section 503, and 8-symbol combining section 504, respectively. Also, the despreading section 501 for a data channel outputs the results, which are obtained by despreading the received signals by a spreading code "0011" of the spreading factor of 4, to a decision section 505 and a selector 506 as they are.

The 2-symbol combining section 502 combines the results, which are obtained by despreading with a spreading code of the spreading factor of 4, equivalent to two symbols and generates the results that may be obtained by despreading with a spreading code of the spreading factor of 8. Similarly, the 4-symbol combining section 503 combines the results, which are obtained by despreading with a spreading code of the spreading factor of 4, equivalent to four symbols and generates the results that may be obtained by despreading with a spreading code of the spreading factor of 16, and the 8-symbol combining section 504 combines the results, which are obtained by despreading with a spreading code of the spreading factor of 4, equivalent to eight symbols and generates the results that may be obtained by despreading with a spreading code of the spreading factor of 32. The combined results of despreading are outputted to the decision section 505 and selector 506, respectively.

Further, for example, a method disclosed in Japanese Unexamined Patent Application No. HEI 11-078454 that was previously filed by the present inventor, may be used as the method for combining the results of despreading. The content thereof is described hereunder.

The decision section 505 compares four results of despreading (that is, four correlation values), which are outputted from the despreading section 501 for a data channel and respective combining sections 502 through 504. Where the received signals are spread by a spreading code of the spreading factor of 4, the correlation value obtained by the despreading section 501 for a data channel becomes the maximum of the four correlation values. Similarly, where the received signals are spread by a spreading code of the spreading factor of 8, the correlation value that is obtained by the two-symbol combining section 502 becomes the maximum of the four correlation values, where the received signals are spread by a spreading code of the spreading factor of 16, the correlation value that is. obtained by the four-symbol combining section 503 becomes the maximum of the four correlation values, and where the received signals are spread by a spreading code of the spreading factor of 32, the correlation value that is obtained by the eight-symbol combining section 504 becomes the maximum of the four correlation values.

And, the decision section 505 decides a symbol rate of the received signals by judging the correlation value that becomes the maximum of the four correlation values. In detail, for example, where the correlation value that has been obtained by the two-symbol combining section 502 becomes the maximum of the four correlation values, the decision section 505 decides that the symbol rate of the received signals is the second highest symbol rate of the symbol rates, which become candidates. And, the decision section 505 outputs a signal indicating the symbol rate of the received signals to the re-spreading section 208 and selector 506 as a result of the decision.

The re-spreading section 208 carries out re-spreading processing on the basis of a spreading code corresponding to the symbol rate that is decided by the decision section 505, and generates replica signals. The selector 506 selects a correlation value corresponding to the decided symbol rate, that is, the correlation value that becomes the maximum of the four correlation values and outputs it to the multiplier 204.

Herein, since the above-described conventional interference signal canceling apparatus cannot decide the symbol rate of data channel signals until it receives TFCI of the control channel signals equivalent to 15 slots, no replica signal can be generated until the TFCI of the control channel signals equivalent to 15 slots is received. Therefore, in the conventional interference signal canceling apparatus, a delay until the replica signals are generated becomes equivalent to at least one frame, and the delay time is made very long. This results in a lowering in the performance of radio receiving apparatus.

However, the interference signal canceling apparatus according to the present invention does not need control channel signals equivalent to 15 slots, and if only data channel signal exists which is corresponding to one symbol equivalent to the highest symbol rate among the symbol rates which have the possibility to be used, it is possible to decide the symbol rate of the received signals. That is, the interference signal canceling apparatus according to the present invention can generate replica signals if only data channel signal exists which is corresponding to one symbol equivalent to the highest symbol rate among the symbol rates which have the possibility to be used. Therefore, the interference signal canceling apparatus according to the present invention can remarkably shorten the delay time from input of the received signal to generation of replica signals in comparison with the conventional interference signal canceling apparatus.

In detail, where one frame consists of 15 slots, although in the conventional interference signal canceling apparatus a symbol rate couldn't be decided until 15 slots were received, in the interference signal canceling apparatus according to the present invention, it is possible to decide the symbol rate within the first one slot of the frame. Therefore, the above-described delay time can be shortened to at least one-fifteenth in comparison with the conventional interference signal canceling apparatus. Further, since the time required for interference signal canceling processing can be remarkably shortened in line with a remarkable decrease in the delay time, the receiving performance can be epoch-makingly improved in comparison with the conventional interference signal canceling apparatus.

In addition, in the interference signal canceling apparatus according to the present invention, no TFCI of the control channel signal is required when deciding the symbol rate. Therefore, since it is not necessary to add any TFCI to the control channel signals, the transmission efficiency of the control channel signals can be improved.

Also, the correlation value calculation section 301 for a data channel in the third stage has the same configuration and operations as those of the correlation value calculation section 201 for a data channel in the first and second stages, except that the decision section 505 does not output any decision result to the re-spreading section 208. Therefore, overlapping description thereof is omitted.

Further, this embodiment is constructed so that the decision section 505 outputs a signal indicating a symbol rate as the result of decision. However, the embodiment may be constructed so that, since the symbol rate and spreading factor correspond to each other in terms of 1 to 1 (the spreading factor is increased in line with a lowering of the symbol rate), the decision section 505 decides a spreading factor of the received signal and outputs a signal indicating the spreading factor to the re-spreading section 208 as the result of decision. In this case, the re-spreading section 208 carries out re-spreading processing with a spreading code corresponding to the decided spreading factor.

Also, in this embodiment, a description was given of the case where the spreading codes of the lowest spreading rate (that is, the highest symbol rate) is repeated to obtain the spreading codes with the respective spreading factors. However, as long as the spreading codes of the respective spreading factor are already known, the interference signal canceling apparatus according to this embodiment can decide a symbol rate of the received signals even where the spreading codes of the lowest spreading factor are not repeated. In this case, the interference signal canceling apparatus according to this embodiment can decide the symbol rates of the received signals by judging the spreading code, in which the correlation value becomes the maximum, after having despread the received signals with the respective already-known spreading codes corresponding to the respective symbol rates.

Thus, with the interference signal canceling apparatus and the interference signal canceling method according to this embodiment, since replica signals are generated by re-spreading processing with spreading codes corresponding to the symbol rates decided prior to receiving a signal equivalent to one frame, it is possible to remarkably shorten the delay time till generation of the replica signals.

### (Embodiment 2)

An interference signal canceling apparatus and an interference signal canceling method according to a second embodiment of the present invention decide a symbol rate of the received signals by comparing average values of the correlation values in a predetermined interval.

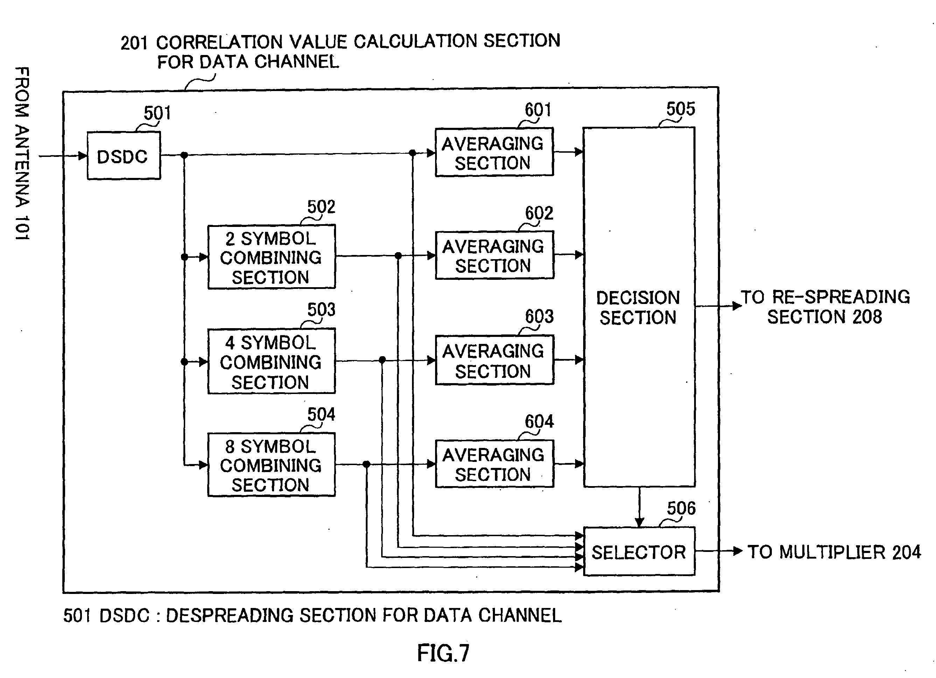

FIG. 7 is a block diagram of the major parts, showing a brief configuration of a correlation value calculation section for the data channel of an interference signal canceling apparatus according to the second embodiment of the present invention. Parts which are identical to those of the correlation value calculation section for a data channel according to the first embodiment are given the same reference numbers, and detailed description thereof is omitted.

In FIG. 7, averaging sections 601 through 604 average correlation values outputted from the despreading section 501 for the data channel and respective combining sections 502 through 504 in a predetermined interval (for example, one slot interval). The decision section 505 decides a symbol rate by comparing respective correlation values in compliance with the average values in the predetermined interval.

Thus, with the interference signal canceling apparatus and the interference signal canceling apparatus method according to a second embodiment, the symbol rates of the received signals are decided by comparing the average values of correlation values in a predetermined interval. It is possible to improve the accuracy of correlation values to be compared. Therefore, it is possible to improve the accuracy of deciding the symbol rates.

### (Embodiment 3)

An interference signal canceling apparatus and an interference signal canceling method according to a third embodiment of the present invention decide symbol rates of data channel signals based on correlation values of data channel signals that reach a threshold value, which is obtained by the correlation values of control channel signals.

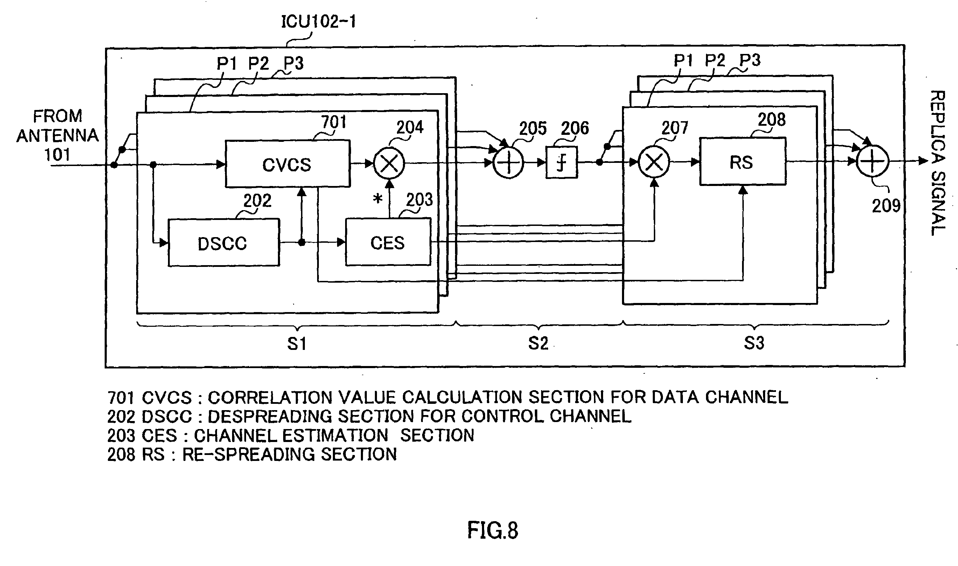

FIG. 8 is a block diagram of the major parts, showing a brief configuration of an ICU of the first stage and second stage of an interference signal canceling apparatus according to a third embodiment of the present invention.

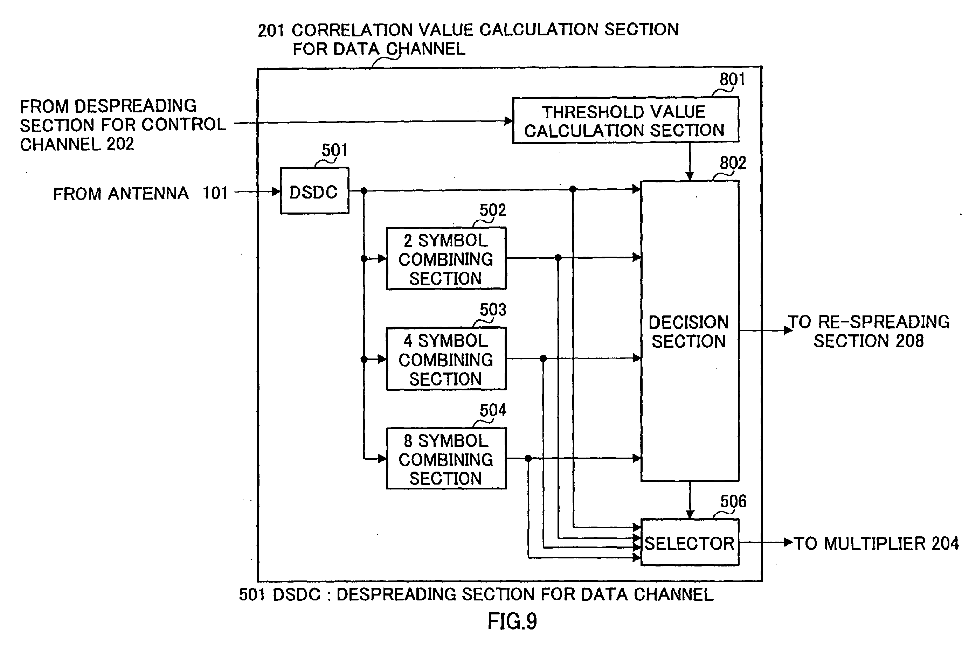

FIG. 9 is a block diagram of the major parts, showing a brief configuration of a correlation value calculation section for the data channel of an interference signal canceling apparatus according to the third embodiment of the present invention. Parts which are identical to those of ICUs and the correlation value calculation section for a data channel according to the first embodiment are given the same reference numbers, and a detailed description thereof is omitted.

In FIG. 8, a received signal is inputted into a correlation value calculation section 701 for a data channel through an antenna 101, and a result (a correlation value) of despreading, which is obtained by the despreading section 202 for a control channel is inputted thereinto.

As shown in FIG. 9, the correlation value that is obtained by the despreading section 202 for a control channel is inputted into a threshold value calculation section 801. Since the ratio of a transmission power value of the data channel signal with respect to a transmission power value of a control channel signal is previously known, it is possible to predict a correlation value of the data channel signal on the basis of the correlation value of the control channel signal. Therefore, the threshold value calculation section 801 calculates a predicted correlation value of the data channel signal from the correlation value of the control channel signal in compliance with the ratio of the transmission power value set in advance, and outputs the predicted correlation value to a decision section 802 as the threshold value.

The decision section 802 decides the symbol rate of the received signals by judging the correlation value that becomes the maximum of the four correlation values obtained by the despreading section 501 for a data channel and respective combining sections 502 through 504 and has reached the above-described threshold value (predicted correlation value). Therefore, in the case where the correlation value is smaller the above-described threshold value although it becomes the maximum of the four correlation values, the correlation value may be excluded from the decision. That is, the decision section 802 does not decide the symbol rate of the received signals where the correlation value that becomes the maximum is smaller than the above-described threshold value. That is, in a case where the reliability of the data channel signal is low, no symbol rate is decided. Also, since the re-spreading section 208 cannot carry out any re-spreading processing unless the symbol rate is decided, no replica signal is generated. Thus, in this embodiment, the possibility that erroneous replica signals are generated on the basis of the received signals whose reliability is low may be excluded.

Also, although, in this embodiment, the predicted correlation value itself is used as the threshold value, a value that is obtained by multiplying the predicted correlation value by a predetermined value may be used as the threshold value.

Thus, with the interference signal canceling apparatus and the interference signal canceling method according to this embodiment, since the symbol rate of data channel signals is decided on the basis of the correlation value of the data channel signals that has reached the threshold value, which is obtained by the correlation value of the control channel signals, it is possible to exclude a possibility by which an erroneous replica signal is generated. Therefore, with the interference signal canceling apparatus and the interference signal canceling method according to this embodiment, since there is no case where any interference signal canceling processing is carried out on the basis of erroneous replica signals, the accuracy of the interference signal canceling processing can be improved.

Further, the above-described second and third embodiments may be employed in a combination thereof.

Also, in the first through third embodiments described above, a description was given of a radio communication system as an example, in which a control channel is used separately from the data channel. However, the present invention is not limited to the example. That is, the interference signal canceling apparatus according to the first through third embodiments may be applicable to a radio communication system in which communications are performed with control data inserted into the user data in a single channel.

In addition, in the first through third embodiments, a description was given of a parallel type interference signal canceling apparatus as an example. But, the present invention may be applicable to all types of interference signal canceling apparatuses in which replica signals are generated by re-spreading processing. That is, the present invention is applicable to a serial type interference signal canceling apparatus and a symbol ranking type interference signal canceling apparatus.

Where the present invention is applied to the symbol ranking type interference signal canceling apparatus, the symbol-by-symbol likelihood is calculated block by block where the length of a symbol having the highest symbol rate among communication partners is made into a block length. Therefore, since the symbol ranking type interference signal canceling apparatus can calculate the likelihood even if the symbol rate is not clear, ranking processing can be carried out before receiving one frame. Accordingly, the delay time from input of a received signal into the symbol ranking type interference signal canceling apparatus to commencement of symbol ranking processing can be remarkably shortened. Also, the symbol ranking type interference signal canceling apparatus can generate a replica signal prior to receiving one frame, and the delay time till generation of the replica signal can be remarkably shortened.

As described above, according to the present invention, the delay till generation of replica signals can be reduced, resulting in improvement of the receiving performance of a radio receiving apparatus.

This application is based on the Japanese Patent Application No. 2000-009268 filed on January 18, 2000, entire content of which is expressly incorporated by reference herein.

### Industrial Applicability

The present invention is applicable to a mobile station and a base station, which are used in a mobile communication system. Where applicable, since the delay time till generation of replica signals can be remarkably shortened in a mobile station and a base station, the receiving performance of the mobile station and base station can be improved.

## Claims

1. An interference signal canceling apparatus comprising:
a correlation value calculator for calculating a correlation value per symbol for each of symbol rates that becomes candidates of a specified symbol rate with respect to a received signal of the specified symbol rate;
a decider for deciding a symbol rate of the received signal based on a plurality of obtained correlation values; and
a generator for generating a replica signal by providing the decided signal with spreading processing with a spreading code corresponding to the decided symbol rate.

2. The interference signal canceling apparatus according to claim 1, wherein
said decider decides the symbol rate of the top symbol of a frame.

3. The interference signal canceling apparatus according to claim 1, wherein
said correlation value calculator calculates the correlation value per symbol for each of the symbol rates that becomes the candidates, by despreading the received signal with a known spreading code corresponding to one symbol of the symbol rate that becomes the candidate.

4. The interference signal canceling apparatus according to claim 1, wherein,
where the received signal per symbol is spread with a second spreading code for which the first spreading code corresponding to the highest symbol rate of the symbol rates that become the candidates are repeated,
said correlation value calculator calculates the correlation value per symbol for each of the symbol rates that becomes the candidates, by combining the results of despreading after despreading the received signal with the first spreading code.

5. The interference signal canceling apparatus according to claim 1, wherein
said decider decides the symbol rate of the received signal on the basis of a correlation value that becomes the maximum among a plurality of correlation values.

6. The interference signal canceling apparatus according to claim 5, wherein
said decider decides the symbol rate of the received signal on the basis of a correlation value that becomes higher than a threshold value obtained by a correlation value of a control signal among a plurality of correlation values.

7. The interference signal canceling apparatus according to claim 1, further comprising
an averager for averaging a plurality of correlation values in a predetermined interval, wherein
said decider decides the symbol rate of the received signal on the basis of the averaged correlation value.

8. A mobile station apparatus having an interference signal canceling apparatus, said interference signal canceling apparatus comprising:
a correlation value calculator for calculating a correlation value per symbol for each of symbol rates that becomes candidates of a specified symbol rate with respect to a received signal of the specified symbol rate;
a decider for deciding a symbol rate of the received signal based on a plurality of obtained correlation values; and
a generator for generating a replica signal by providing the decided signal with spreading processing with a spreading code corresponding to the decided symbol rate.

9. A base station apparatus having an interference signal canceling apparatus, said interference signal canceling apparatus comprising:
a correlation value calculator for calculating a correlation value per symbol for each of symbol rates that becomes candidates of a specified symbol rate with respect to a received signal of the specified symbol rate;
a decider for deciding a symbol rate of the received signal based on a plurality of obtained correlation values; and
a generator for generating a replica signal by providing the decided signal with spreading processing with a spreading code corresponding to the decided symbol rate.

10. An interference signal canceling method comprising the steps of:
calculating a correlation value per symbol for each of symbol rates that becomes candidates of a specified symbol rate with respect to a received signal of the specified symbol rate;
deciding a symbol rate of the received signal based on a plurality of obtained correlation values; and
generating a replica signal by providing the decided signal with spreading processing with a spreading code corresponding to the decided symbol rate.
